# EUROPEAN PATENT APPLICATION

(11) **EP 3 663 600 A1**
(43) Date of publication of application: **10.06.2020**
(21) Application number: 18210153.5
(22) Date of filing: 04.12.2018
(51) Int. Cl.: F16C 33/66, F16C 33/78, F16J 15/44, F16C 33/76, F16C 33/80, F16C 19/06

(54) **BEARING SHAFT SEAL ASSEMBLY**

(71) Applicant: AVL MTC Motortestcenter AB, 46138 Trollhättan (SE)
(72) Inventor: ABERG, Magnus, 46191 TROLLHÄTTAN (SE); SETTY, Roopesh, 41301 GÖTEBORG (SE)
(74) Representative: Babeluk, Michael

(57) **Abstract**

The invention relates to a bearing shaft seal assembly comprising a rotatable shaft (1) and a casing (2) with at least one sealing wall (6), wherein the shaft (1) extends through the sealing wall (6) and wherein the shaft (1) comprises at least one slinger (5), wherein a gap (7) is formed between the slinger (5) and the sealing wall (6). It is an object of the present invention to provide a bearing shaft seal assembly with a reduced risk of leaking lubricant. This object is achieved in accordance with the invention in such a way that the sealing wall (6) comprises at least one drainage channel (20) extending at least partially around the shaft (1).

## Description

The present invention relates to a bearing shaft seal assembly comprising a rotatable shaft and a casing with at least one sealing wall, wherein the shaft extends through the sealing wall and wherein the shaft comprises at least one slinger, wherein a gap is formed between the slinger and the sealing wall
In the US 6,247,702 B1 a seal assembly is shown that comprises two slingers on the shaft and a sealing wall set in between the slingers and a second sealing wall set behind the second slinger. The slingers prevent the lubricant from leaking from a lubricant side via the clearance spaces to the roller bearing by slinging the lubricant on the slingers radially outwards and away from the sealing walls when the shaft is rotated. This lessens the amount of lubricant that arrives on the sealing walls. However, the lubricant can still run along the sealing wall and through the clearance space. Therefore, lubricant can enter the area of the roller bearing. To minimize the amount of leaking lubricant two slingers are placed behind one another. This construction is very complex and difficult to assemble. The components have to provide only small clearance spaces and therefore have to be manufactured very precisely. Also, the second slinger can't prevent the leaking through the clearance space that leads to the bearing seat.

It is an object of the present invention to provide a bearing shaft seal assembly with a reduced risk of leaking lubricant.

This object is achieved in accordance with the invention in such a way that the sealing wall comprises at least one drainage channel extending at least partially around the shaft.

The lubricant is normally machine oil.

The casing serves for separating a lubricant side from the other side that is normally essentially free from lubricant, along the shaft. It therefore comprises at least one wall for separation. Usually the casing is a closed casing that encases the lubricant side. In most cases, the casing also serves for holding the shaft in its position.

If lubricant is running down the sealing wall in the direction of the shaft it enters the drainage channel. The flow of the lubricant can therefore be redirected and thus flows along the drainage channel. This prevents the lubricant form entering the clearance space in between the shaft and the part of the casing that lies behind the sealing wall. Therefore, the amount of leaking lubricant can be significantly reduced, thus enhancing the sealing properties of the assembly.

The drainage channel can be easily produced, for example by milling or by planning it already during casting of the sealing wall. Therefore, it is inexpensive to provide. Also, the clearance space can be a bit wider, thus allowing more manufacturing tolerances. The drainage channel can for example be formed as a groove in the sealing wall.

This invention is especially advantageous for embodiments with high speed shafts, meaning with shafts operating at a high number of revolutions.

The gap between the slinger and the sealing wall is preferably very small so that little lubricant can enter the gap. The width of the gap normally depends on the chosen lubricant and the size of the assembly and is limited by manufacturing tolerances. Preferably the width of the gap is below 0,3 mm, especially preferably below 0,1 mm.

It is advantageous, when the slinger extends beyond the drainage channel in the radial direction. If the slinger covers the drainage channel, then only lubricant that entered the gap between the slinger and sealing wall enters the drainage channel, thus preventing overfilling of the drainage channel.

As the slinger extends radially outwards from the shaft it has an extension height from the shaft radially outwards. Preferably, the drainage channel is positioned at half extension height of the slinger.

If the casing is a closed casing, enclosing a space containing lubricant, then it is beneficial that the slinger is located inside the casing. This way, the slinger can develop a big effect by spinning away the lubricant from the potential leaking point, where the shaft extends through the sealing wall.

It is also advantageous if the slinger is located before the sealing wall, viewed from a lubricant side.

To make it easy for the lubricant to run off along the drainage channel, it is advantageous if the drainage channel extends around the shaft at an essentially constant distance.

According to an embodiment of the invention, the drainage channel has a cross-section with an apex and that the apex is off-centred towards the shaft. With apex the deepest point in the cross-section of the drainage channel is meant. Therefore, an asymmetrical position of the apex along the width of the drainage channel is provided, whereby the apex is shifted in the direction of the shaft.

It is especially advantageous if the drainage channel has a cross-section that comprises a first wall between an apex of the drainage channel and the shaft and a second wall on the other side of the apex and that the first wall is steeper than the second wall. This improves the discharging abilities of the drainage channel. Lubricant, running along the sealing wall according to gravity in the direction of the shaft can therefore enter the drainage channel easily via the second wall. The steeper first wall prevents the lubricant maintaining its way towards the shaft, thus redirecting the flow of the lubricant in circumferential direction along the drainage channel. On the other side of the shaft, the gravity pulls the lubricant in the direction of the not so steep second wall, thus allowing the lubricant to exit the drainage channel easily.

According to a further embodiment of the invention the drainage channel is connected to at least one first drain for discharging lubricant that extends from the drainage channel at least partially radially away from the shaft. The drain helps discharging the lubricant from the drainage channel. Preferably the drain is positioned below the shaft if the assembly is in an intended installation position. This provides a proper function of the drain as the gravity pulls the lubricant from the drainage channel into the drain. The drain can lead the lubricant away from the drainage channel into a lubricant reservoir or a lubricant distribution system.

It is especially advantageous if the bearing shaft seal assembly comprises at least one secondary seal. Especially in embodiments with shafts operating at a high number of revolutions it is advantageous if the secondary seal is a labyrinth seal. A labyrinth seal should comprise at least two grooves or seams on either the shaft or the casing which correspond with the other component respectively meshing into each other to form a labyrinth with a tight gap or gaps. The gap should be as small as possible and normally depends on the fluidity of the used lubricant. Normally it is limited by the manufacturing tolerances. For example, if the shaft has a diameter of about 5 cm the gap should be below 0,3 mm, preferably below 0,1 mm. Alternatively, the secondary seal can only comprise one gap between the shaft and the casing that is very narrow.

In a preferred embodiment, the secondary seal comprises at least one second drain for discharging lubricant that extends from the secondary seal at least partially radially away from the shaft. That way, lubricant leaking through the secondary seal can be lead back to the lubricant side, a reservoir or a lubricant distribution system like a pump.

For positioning the shaft in the assembly, it can be provided that the bearing shaft seal assembly comprises at least one roller bearing.

For providing further sealing, it can be arranged that the roller bearing comprises at least one first sealing ring extending between the races. Preferably, one first sealing ring is positioned on each side of the rolling elements.

The roller bearing can comprise at least one second sealing ring and the second sealing ring can be located between the outer race and the casing. This second sealing ring is preferably an O-ring.

According to a further embodiment of the invention the second sealing ring is off-centred along the rotational axis of the shaft in respect to the roller bearing. If the second sealing is not positioned symmetrically, then it doesn't press on the center of the bearing, which is normally the weakest point due to the reduced thickness of the outer race.

To prevent entry of lubricant into the roller bearing it can be advantageous, if the secondary seal is located between the slinger and the roller bearing.

The present invention will be explained below in closer detail by reference to a nonlimiting embodiment according to the invention shown in the drawings, wherein:
- Fig. 1: shows a cross-section of an embodiment according to the invention;
- Fig. 2: shows an enlarged part of Fig 1;
- Fig. 3: shows a lateral view of the embodiment cut along the rotation axis;

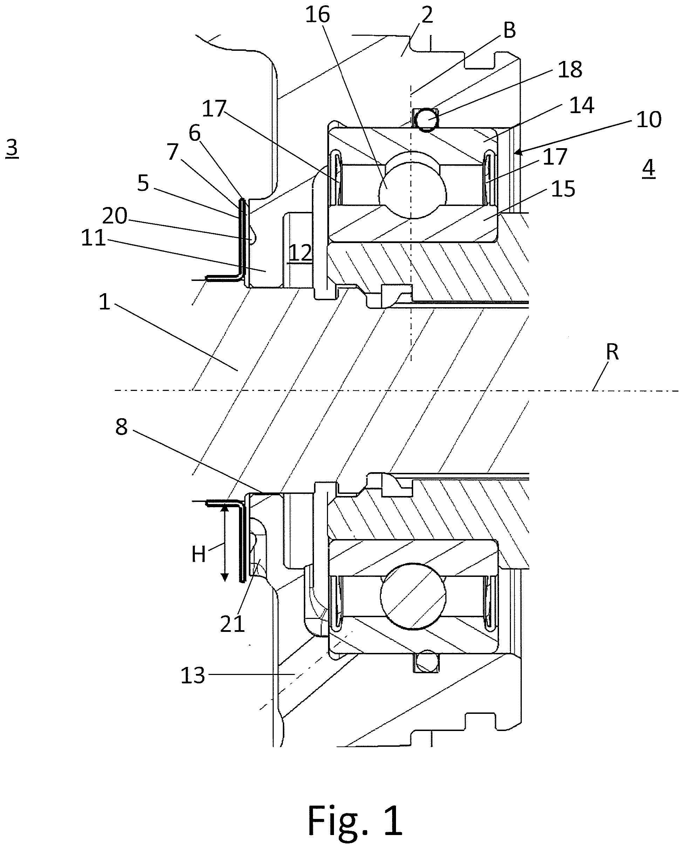

Fig. 1 shows a detail of a bearing shaft seal assembly with a shaft 1 with a rotational axis R and a casing 2, wherein the casing 2 has bore and the shaft 1 extends through it. The casing 2 separates a lubricant side 3 from the other side 4, which is free from lubricant or contains another lubricant. On the shaft 1 a slinger 5 is fixedly connected which has the form of a ring and extends radially away from the shaft 1. Therefore, it provides an extension height H from the shaft 1 to its furthermost radial extent. The slinger 5 is located in the area of a sealing wall 6 of the casing 2 and forms a gap 7 together with the sealing wall 6.

A secondary seal 8 is arranged directly after the sealing wall 6. The secondary seal 8 provides a protrusion 11 that forms a clearance space in form of a secondary gap 9 with the shaft 1. This secondary gap 9 is very narrow and prevents lubricant from advancing in the direction of the other side 4. On the side of the protrusion 11 that is turned away from the lubricant side 3, a collection space 12 of the secondary seal 8 between the shaft 1 and the casing 2 is arranged. A second drain 13 on the lower side leads from this collection space 12 to the lubricant side 3, leading the lubricant that managed to get through the secondary gap 9 and running down in the collection space 12 back to the lubricant side 3.

Also, a roller bearing 10 is located between the other side 4 and the secondary seal 8. It comprises an outer race 14 and an inner race 15 and rolling elements 16 like balls arranged in between them. The rolling elements 16 are arranged in one plain that is centric along the rotational axis R in respect to the races 14, 15. Between the races 14, 15 and on both sides of the races 14, 15 first sealing rings 17 are arranged, sealing the area of the rolling elements 16 and preventing intrusion of lubricant from the outside or leaking of lubricant of the rolling elements 16. This makes the cross-section of the roller bearing 10 symmetrical along a radial axis B, which is rectangular to the rotational axis R.

The connection of the casing 2 and the outer racer 14 is sealed by a second sealing ring 18 that is off centred along the rotational axis R in respect to the roller bearing. The second sealing ring 18 is not arranged along the radial axis B but is shifted in the direction of the other side 4.

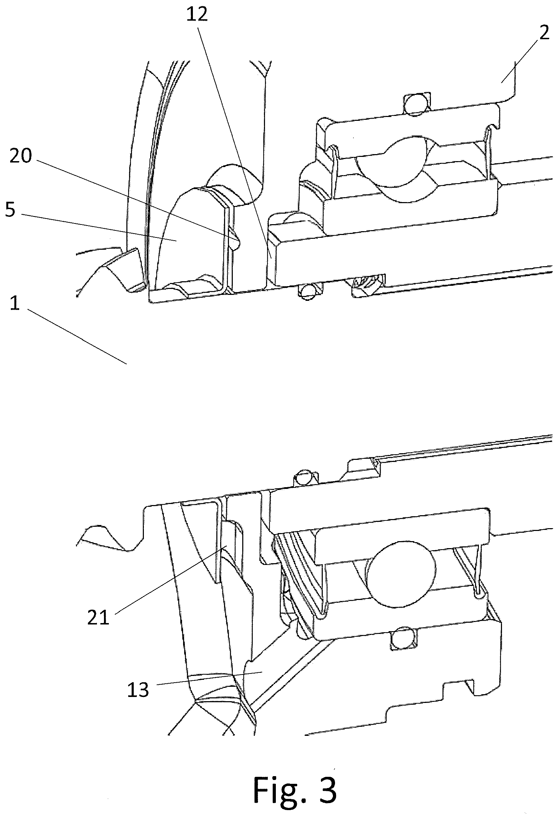

On the sealing wall 8 a drainage channel 20 in form of a groove is arranged. Fig. 3 shows that the drainage channel 20 extends around the shaft 1 in constant distance and therefore forms a ring shape around the shaft 1. On the lower side a first drain 21 is arranged that leads lubricant from the drainage channel 20 radially outwards and back to the lubricant side 3. Therefore, gravity leads the lubricant along the drainage channel 20 to the first drain 21 which is preferably located on the lowest point of the drainage channel 20.

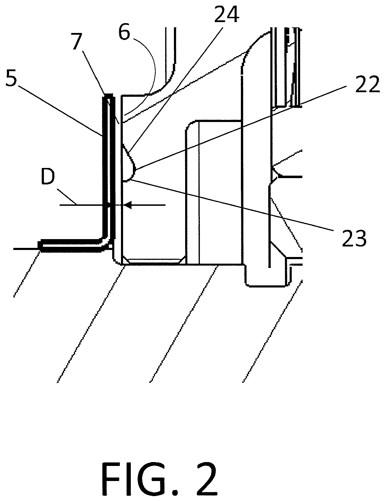

Fig. 2 shows that the slinger 5 and the sealing wall 6 generate a gap 7 that has a width D of 0,2 mm. This prevents most of the lubricant from entering the gap 7. The drainage channel 20 is located essentially on the half extension height H of the slinger 1. The drainage channel 20 has a cross-section in form of a nose and has an apex 22 that is in cross-section shifted towards the shaft 1. Therefore, the apex 22 does not lie in the middle by cross-section. From the apex 22 and in direction to the shaft 1 the drainage channel has a first wall 23 that is lightly curved. On the other side of the apex 22 a second wall 24 is provided that is essentially flat and is less steep than the first wall 23, meaning that the angle of the second wall 24 in respect to the sealing wall 6 is smaller than the mean angle of the first wall 23 in respect to the sealing wall 6.

As the cross-section of the drainage channel 20 maintains essentially the same form along its circular extension, gravity leads lubricant running down the sealing wall 6 via the second wall 24 into the drainage channel 20 at the upper side. At the lower side of the drainage channel 20 the lubricant can exit the drainage channel 20 again via the second wall 24.

By position or direction statements like "lower" or "upper" it is assumed that the assembly is in an operating position as intended.

## Claims

1. A bearing shaft seal assembly comprising a rotatable shaft (1) and a casing (2) with at least one sealing wall (6), wherein the shaft (1) extends through the sealing wall (6) and wherein the shaft (1) comprises at least one slinger (5), wherein a gap (7) is formed between the slinger (5) and the sealing wall (6), **characterised in that** the sealing wall (6) comprises at least one drainage channel (20) extending at least partially around the shaft (1).

2. A bearing shaft seal assembly according to claim 1, **characterised in that** the slinger (5) extends beyond the drainage channel (20) in the radial direction.

3. A bearing shaft seal assembly according to claim 1 or 2, **characterised in that** the slinger (5) is located inside the casing (2).

4. A bearing shaft seal assembly according to one of claims 1 to 3, **characterised in that** the slinger (5) is located before the sealing wall (6), viewed from a lubricant side (3).

5. A bearing shaft seal assembly according to one of claims 1 to 4, **characterised in that** the drainage channel (20) extends around the shaft (1) at an essentially constant distance.

6. A bearing shaft seal assembly according to one of claims 1 to 5, **characterised in that** the drainage channel (20) has a cross-section with an apex (22) and that the apex (22) is off-centred towards the shaft (1).

7. A bearing shaft seal assembly according to one of claims 1 to 6, **characterised in that** the drainage channel (20) has a cross-section that comprises a first wall (23) between an apex (22) of the drainage channel (20) and the shaft (1) and a second wall (24) on the other side of the apex (22) and that the first wall (23) is steeper than the second wall (24).

8. A bearing shaft seal assembly according to one of claims 1 to 7, **characterised in that** the drainage channel (20) is connected to at least one first drain (21) for discharging lubricant that extends from the drainage channel (20) at least partially radially away from the shaft (1).

9. A bearing shaft seal assembly according to one of claims 1 to 8, **characterised in that** the bearing shaft seal assembly comprises at least one secondary seal (8).

10. A bearing shaft seal assembly according to claim 9, **characterised in that** the secondary seal (8) comprises at least one second drain (13) for discharging lubricant that extends from the secondary seal (8) at least partially radially away from the shaft (1).

11. A bearing shaft seal assembly according to one of claims 1 to 10, **characterised in that** the bearing shaft seal assembly comprises at least one roller bearing (10).

12. A bearing shaft seal assembly according to claim 11, **characterised in that** the roller bearing (10) comprises at least one first sealing ring (17) extending between the races (14, 15).

13. A bearing shaft seal assembly according to claim 11 or 12, **characterised in that** the roller bearing (10) comprises at least one second sealing ring (18) and that the second sealing ring (18) is located between the outer race (14) and the casing (2).

14. A bearing shaft seal assembly according to claim 13, **characterised in that** the second sealing ring (18) is off-centred along the rotational axis (R) of the shaft (1) in respect to the roller bearing (10).

15. A bearing shaft seal assembly according to one of claims 9 to 14, **characterised in that** the secondary seal (8) is located between the slinger (5) and the roller bearing (10).
